(19)

Europäisches
Patentamt
European
Patent Office
Office européen
des brevets

(11) **EP 1 601 209 B1**

(12) **EUROPEAN PATENT SPECIFICATION**

(45) Date of publication and mention
of the grant of the patent:
**11.04.2012 Bulletin 2012/15**

(51) Int Cl.:
**H04N 7/26** *(2006.01)*    **H04N 7/36** *(2006.01)*
**H04N 7/46** *(2006.01)*    **H04N 7/50** *(2006.01)*

(21) Application number: **05015780.9**

(22) Date of filing: **10.01.2003**

(54) **Block prediction method using improved direct mode**

Methode zur Blockprädiktion unter Verwendung des Direkt-Modus

Méthode pour la prédiction de blocks avec du mode direct

(84) Designated Contracting States:
**FI FR IT SE**

(30) Priority: **09.04.2002 KR 2002019262**
**21.11.2002 KR 2002072862**

(43) Date of publication of application:
**30.11.2005 Bulletin 2005/48**

(62) Document number(s) of the earlier application(s) in
accordance with Art. 76 EPC:
**03000442.8 / 1 359 769**

(73) Proprietor: **LG Electronics, Inc.**
**Seoul 150-010 (KR)**

(72) Inventor: **Jeon, Byeong Moon**
**Gwangjin-ku**
**Seoul (KR)**

(74) Representative: **Schorr, Frank Jürgen et al**
**Diehl & Partner GbR**
**Augustenstrasse 46**
**80333 München (DE)**

(56) References cited:
**EP-A- 0 863 674    WO-A-01/33864**

- **WIEGAND T: "JOINT MODEL NUMBER 1,
  REVISION 1(JM-IRL)" ITU STUDY GROUP 16 -
  VIDEO CODING EXPERTS GROUP, XX, XX, 3
  December 2001 (2001-12-03), pages 1,3-75,
  XP001086627**
- **TSUHAN CHEN ET AL: "A new frame interpolation
  scheme for talking head sequences"
  PROCEEDINGS OF THE INTERNATIONAL
  CONFERENCE ON IMAGE PROCESSING. (ICIP).
  WASHINGTON, OCT. 23 - 26, 1995, LOS
  ALAMITOS, IEEE COMP. SOC. PRESS, US, vol. 3,
  23 October 1995 (1995-10-23), pages 591-594,
  XP010197038 ISBN: 0-7803-3122-2**
- **"WORKING DRAFT NUMBER 2, REVISION 2 (WD-
  2)", DOCUMENT JVT-B118R2, XX, XX, 29 January
  2002 (2002-01-29), XP001086630,**

**Description**

BACKGROUND OF THE INVENTION

1. Field of the Invention

The present invention relates to a moving picture coding system, and particularly, to a block prediction method using improved direct mode for a B picture.

2. Description of the Background Art

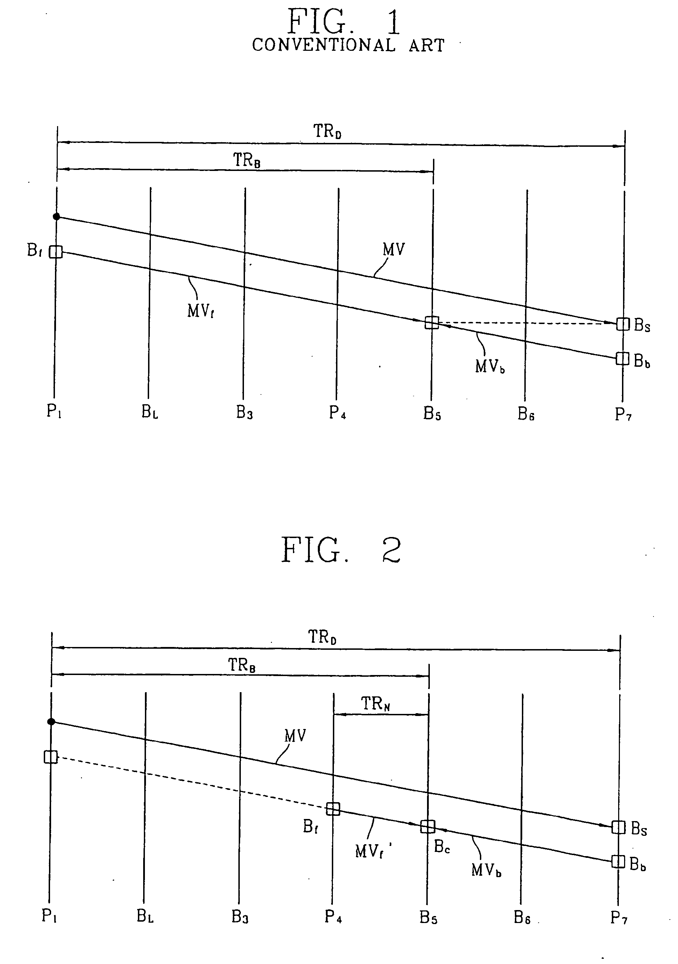

In a moving picture coding system, one of advantages for using B picture is that a direct prediction mode which does not add overhead information is selected more than any other prediction modes (a forward prediction, a backward prediction, a bidirectional prediction and intra prediction, etc.). Therefore, the moving picture coding system is able to have higher coding efficiency when using the B picture than the coding efficiency when using only P picture.
In the B picture, the block prediction method using the direct mode is to calculate forward motion vector and backward motion vector as scaled versions of a motion vector of a co-located block in a backward reference picture for direct mode, to obtain two distinct motion-compensated blocks using above motion vectors, and to obtain predicted block by averaging two motion-compensated blocks finally.
The block prediction method using the direct mode as above will be described in more detail with reference to Figure 1.
Figure 1 is a view showing a picture pattern for describing the block prediction method using the direct mode according to the conventional art. As shown therein, the picture pattern comprises an I-picture (not shown) coded using prediction only from decoded samples within the same picture, P pictures P1, P4, and P7 coded by inter prediction using at most one motion vector from previously-decoded reference pictures, and B-pictures B2, B3, B5 and B6 coded by two inter prediction blocks from previously-decoded reference pictures.
Also, parameters shown in Figure 1 will be described first for the convenience' sake. $TR_D$ represents a temporal distance between a forward reference picture for direct mode (P1) and a backward reference picture for direct mode (P7), $TR_B$ represents a temporal distance between the forward reference picture for direct mode (P1) and a current B picture (B5), MV represents a motion vector of a co-located block in the backward reference picture for direct mode (P7), $MV_f$ represents a forward motion vector of direct mode pointing to the forward reference picture for direct mode, and $MV_b$ represents a backward motion vector of direct mode pointing to the backward reference picture for direct mode. Herein, the forward reference picture for direct mode is a reference picture pointed by the motion vector of the co-located block in the backward reference picture for direct mode.
The block prediction method for direct mode will be described using above parameters as follows.
First, the forward motion vector of direct mode ($MV_f$) is obtained from a motion vector (MV) of a co-located block $B_s$ in the backward reference picture for direct mode (P7) by applying following equation (1).

$$MV_f = \frac{TR_B \times MV}{TR_D} \text{----------------------------------------------------} \quad (1)$$

In addition, the backward motion vector of direct mode ($MV_b$) is obtained from a motion vector (MV) of the co-located block $B_s$ in the backward reference picture for direct mode (P7) by applying following equation (2).

$$MV_b = (TR_B - TR_D) \times \frac{MV}{TR_D} \text{------------------------------------} \quad (2)$$

Therefore, blocks $B_f$ and $B_b$ are motion-compensated using the motion vectors $MV_f$ and $MV_b$ calculated from equations (1) and (2), and after that, the two blocks are averaged to get a prediction value $B_c'$ of a current block $B_c$ in the B picture as following equation (3).

$$B_c' = \frac{B_j + B_h}{2} \quad \text{-------------------------------------------------} \quad (3)$$

However, according to the block prediction method for the direct mode of the conventional art, the forward motion vector of direct mode is obtained from the motion vector of the co-located block in the backward reference picture for direct mode, and therefore, the obtained value is just an approximated value, not a precise motion vector of the current block of the B picture.

Also, according to the block prediction method for direct mode of the conventional art, even though the reference picture temporally close to the B picture has higher similarity with the B picture, the block prediction is made using the average of two distinct motion-compensated blocks without considering temporal distance between the reference pictures. Therefore, the accuracy of predicted block is lowered.

Especially, in a sequence having a fading scene, since brightness of continuous B pictures can be gradually darkened or gradually lightened, the prediction value obtained by simply averaging two motion-compensated blocks has a lot of difference from the original value, and thereby the coding efficiency of the entire system is greatly lowered.

EP 0 863 674 discloses a system for coding of digital video images such as bi-directionally predicted video object planes (B-VOPs), in particular, where the B-VOP and/or a reference image used to code the B-VOP is interlaced coded. For a B-VOP macroblock which is co-sited with a field predicted macroblock of a future anchor picture, direct mode prediction is made by calculating four field motion vectors, then generating the prediction macroblock. The four field motion vectors and their reference fields are determined from an offset term of the current macroblock's cording vector, the two future anchor picture field motion vectors, the reference field used by the two field motion vectors of the co-sited future anchor macroblock, and the temporal spacing in field periods, between the current B-VOP fields and the anchor fields. To derive pixel data of a picture, the document uses averaging between forward and backward pictures.

WO 01/33864 discloses a method of encoding a sequence of pictures, each picture being partitioned into non-overlapping blocks of pixels, the method comprising, for a block belonging to a picture to be encoded on the basis of a past reference frame and a future reference frame, hereafter referred to as a block to be encoded, at least the steps of deriving for a block in the future reference frame with the same location as the block to be encoded, an optimum motion vector on the basis of the past reference frame and a corresponding optimum prediction block in the past reference frame, deriving the sum of absolute difference between the block in said future reference frame with the same location as the block to be encoded and the optimum prediction block in the past reference frame, hereafter referred to as SADref, deriving for the block to be encoded, a forward motion vector on the basis of the optimum motion vector and a corresponding forward prediction block in the past reference frame, deriving the sum of absolute difference between the block to be encoded and the forward prediction block, hereafter referred to as SADf, deriving for the block to be encoded, a backward motion vector on the basis of the optimum motion vector and a corresponding backward prediction block in the future reference frame, deriving the sum of absolute differences between the block to be encoded and the backward prediction block, hereafter referred to as SADb, encoding the block to be encoded according to a direct prediction mode if one of the following conditions is satisfied:

the spatial coordinates of the optimum motion vector are within a given range, the deviation of SADref towards SADb is smaller than a given threshold, the deviation of SADref towards SADf is smaller than a given threshold.

Document "Joint Video Team (JVT) of ISO/IEC MPEG and ITU-T VCEG: Working Draft Number 2 Revision 2 of ITU-T Recommendation H.26L and MPEG-4/Part 10" of Thomas Wiegand discloses five different prediction modes for bi-predictive pictures that were under discussion for a future standard in December 2001. According to a proposal, prediction blocks for the direct and bi-directional prediction mode are calculated by using forward and backward motion vectors to obtain appropriate blocks from reference fames, and then these blocks are averaged by dividing the sum of the two prediction blocks by two.

A technique generating smooth head motion and rendering lip motion that is synchronised with the voice of a person is disclosed by the article "A new frame interpolation scheme for talking head sequences" of Tsuhan Chen, Yao Wang, Hans Peter Graf and Cassandra Swain. This article was published in the proceedings of the international conference on image processing on Oct. 23-26 1995 in Washington. According to this article, a mesh (i.e., a control grid) is set up for the foreground area in a frame $f2$. Next, for each node of the mesh in frame $f2$, a corresponding node is determined in a frame $f1$ so that the two images match well after warping one to the other based on the nodal correspondences in the two meshes. This is accomplished by the energy minimization approach. Finally, assuming the motion velocity of each node is constant between $f1$ and $f2$, the nodal positions in the interpolated frame fint are linearly interpolated from those in $f1$ and $f2$ i.e., with weights T2/(T1 +T2) and T1/(T1 + T2).

SUMMARY OF THE INVENTION

It is the object of the present invention to provide a block prediction method using direct mode which has improved coding efficiency and an improved accuracy of the predicted block.

The above object is solved by the combination of features of independent claim 1. Preferred embodiments are defined by the dependent claims.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a view showing a picture pattern for describing a block prediction method for direct mode according to the conventional art;

Figure 2 is a view showing a picture pattern for describing a block prediction method for direct mode according to the present invention;

Figure 3 is a view showing a picture pattern for describing an interpolative prediction method according to an embodiment of the present invention; and

Figure 4 is a view showing a picture pattern for describing an interpolative prediction method according to another embodiment of the present invention.

DETAILED DESCRIPTION OF THE PREFERRED EMBODIMENTS

Reference will now be made in detail to the preferred embodiments of the present invention, examples of which are illustrated in the accompanying drawings.

In a block prediction method for direct mode according to the present invention, a forward motion vector and a backward motion vector of direct mode are calculated from a motion vector of a co-located block in a backward reference picture for direct mode, two motion-compensated blocks are obtained using above motion vectors, and finally, a predicted block is obtained by interpolating two motion-compensated blocks.

Also, in the block prediction method using direct mode according to the present invention, the backward motion vector is calculated from the backward reference picture for direct mode, a forward motion vector of direct mode is calculated from the reference picture closest to the current B picture among the forward reference pictures , and motion-compensated blocks are obtained from above motion vectors, and finally, a predicted block is obtained by interpolating two motion-compensated blocks.

Hereinafter, an embodiment of the present invention will be described with reference to accompanying Figures as follows.

Figure 2 shows a picture pattern for describing the block prediction method for direct mode according to the present invention. As shown therein, the picture pattern comprises an I-picture (not shown) coded using prediction only from decoded samples within the same picture, P pictures P1, P4, and P7 coded by inter prediction using at most one motion vector from previously-decoded reference pictures, and B-pictures B2, B3, B5 and B6 coded by two inter prediction blocks from previously-decoded reference pictures.

Parameters shown in Figure 2 will be described first for the convenience' sake. $TR_D$ represents a temporal distance between a forward reference picture for direct mode (P1) and a backward reference picture for direct mode (P7), $TR_B$ represents a temporal distance between the forward reference picture for direct mode (P1) and a current B picture (B5), $TR_N$ represents a temporal distance between the reference picture (P4) closest to the current B picture and the current B picture (B5), MV represents a motion vector of a co-located block in the backward reference picture for direct mode (P7), $MV_f'$ represents a forward motion vector of direct mode pointing to the reference picture (P4) closest to the current B picture, and $MV_B$ represents a backward motion vector of direct mode pointing to the backward reference picture for direct mode (P7).

At that time, the motion vector (MV) of the co-located block $B_s$ in the backward reference picture for direct mode (P7) is obtained in the process of coding (or decoding) the backward reference picture for direct mode before the current B picture is coded (or decoded).

The block prediction method for direct mode as constructed above according to the present invention will be described as follows.

The forward motion vector ($MV_f$'), which points to the reference picture (P4) having the closest temporal distance among the forward reference pictures, is obtained from following equation (4).

$$MV_f' = \frac{TR_N \times MV}{TR_D} \quad \text{---------------------------------------------} \quad (4)$$

In addition, the backward motion vector ($MV_b$), which points to the backward reference picture for direct mode (P7), is obtained from the conventional art using following equation (2).

$$MV_b = (TR_B - TR_D) \times \frac{MV}{TR_D} \quad \text{---------------------------------} \quad (2)$$

Accordingly, motion-compensated blocks $B_f$ and $B_b$ are obtained using the motion vectors $MV_f$' and $MV_b$ calculated by the equations (2) and (4).

On the other hand, the predicted value $B_c$' for the block $B_c$ is obtained from the above two motion-compensated blocks $B_f$ and $B_b$. At that time, the B picture may be located closer to one between the reference picture in which the motion-compensated block $B_f$ exists and the backward reference picture for direct mode in which the motion-compensated block $B_b$ exists.

The block prediction method using direct mode according to the present invention can be applied to Figures 1 and 2, and therefore, the reference picture in which the motion-compensated block $B_f$ exists is the forward reference picture for direct mode (for example, P1 picture in Figure 1) or the reference picture closest to the B picture (for example, P4 picture in Figure 2).

Moreover, in a sequence having a fading scene, the brightness of continuous B pictures can be gradually darkened or gradually lightened, and therefore, the predicted value obtained by simply averaging the two motion-compensated blocks $B_f$ and $B_b$ as in the conventional art has a large difference from the actually original value. Therefore, the coding efficiency is lowered significantly.

Therefore, the block prediction method using direct mode according to the present invention performs the interpolative prediction considering the temporal distance between the current B picture and the reference picture in which the motion-compensated block $B_f$ exists (that is, the forward reference picture for direct mode or the reference picture closest to the B picture), and considering the temporal distance between the current B picture and the backward reference picture for direct mode, in order to improve the accuracy of the block predicted by the direct mode.

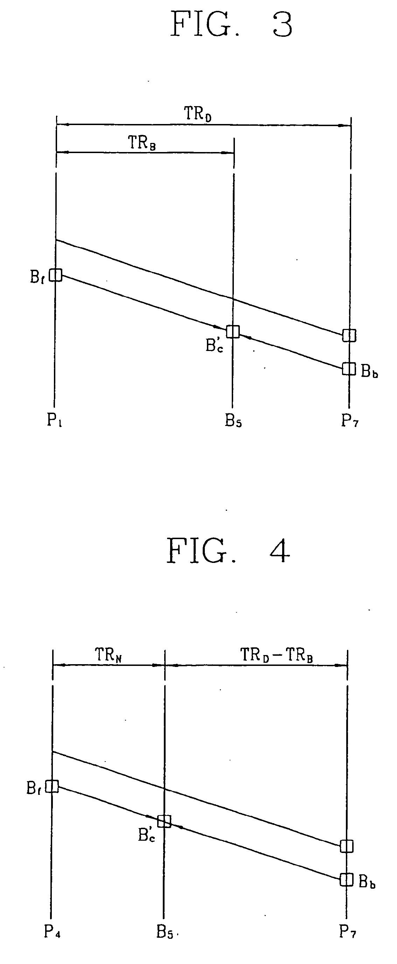

As shown in Figure 3, if the forward motion vector of direct mode is obtained using the conventional art, the motion-compensated block $B_f$ exists in the forward reference picture for direct mode (P1) and the motion-compensated block $B_b$ exists in the backward reference picture for direct mode (P7), the interpolative prediction as following equation (5) is performed. Herein, $TR_D$ is the temporal distance between the forward reference picture for direct mode (P1) and the backward reference picture for direct mode (P7), and $TR_B$ is the temporal distance between the forward reference picture for direct mode (P1) and the current B picture (B5). Especially, the interpolative prediction method includes the same averaging calculation as the conventional art for a case that the B picture is located on a center between the forward reference picture for direct mode and the backward reference picture for direct mode.

$$B_c' = B_f \times \frac{(TR_D - TR_B)}{TR_D} + B_b \times \frac{TR_B}{TR_D} \quad \text{------------------------} \quad (5)$$

Also, as shown in Figure 4, in case that the forward motion vector of direct mode is obtained according to the present invention, the motion-compensated block $B_f$ exists in the reference picture (P4) closest to the current B picture, and the motion-compensated block $B_b$ exists in the backward reference picture for direct mode (P7). Therefore, the interpolative prediction as following equation (6) is performed. Herein, $TR_D$ is the temporal distance between the forward reference picture for direct mode (P1) and the backward reference picture for direct mode (P7), and $TR_B$ is the temporal distance between the forward reference picture for direct mode (P1) and the current B picture, and $TR_N$ is the temporal distance between the reference picture (P4) closest to the current B picture and the current B picture.

$$B_C' = B_f \times \frac{(TR_D - TR_B)}{(TR_N + TR_D - TR_B)} + B_b \times \frac{TR_N}{(TR_N + TR_D - TR_B)} \quad \text{------------} \quad (6)$$

On the other hand, the respective pictures can be represented using a picture order counter, that is, display order information.

Therefore, the equations (5) and (6) can be represented as following equation (7) using the picture order count values, which are the display order information of respective pictures. Herein, $T_c$ is a picture order count value, that is, the display order information allocated to the current B picture, $T_f$ is a picture order count value, that is, the display order information allocated to the forward reference picture for direct mode or a picture order count value, that is, the display order information allocated to the reference picture closest to the B picture in case that the forward motion vector is calculated by the equation (4), and $T_b$ is a picture order count value, that is, the display order information allocated to the backward reference picture for direct mode.

$$B_C' = B_f \times \frac{(T_b - T_c)}{(T_b - T_f)} + B_b \times \frac{(T_c - T_f)}{(T_b - T_f)} \quad \text{-----------------------------} \quad (7)$$

As described above, according to the present invention, the forward motion vector of direct mode is obtained from the motion vector of the co-located block in the backward reference picture for direct mode, and a predicted block of the B picture, which is about to be coded, is obtained by applying interpolative prediction to the motion-compensated block values. Therefore, the coding efficiency is improved when comparing to that of the conventional art.

Also, according to the present invention, the forward motion vector of direct mode is obtained from the reference picture closest to the B picture which is about to be coded (or decoded) presently and having higher similarity with the B picture, and the predicted block of the B picture is obtained by applying the interpolative prediction to the blocks which are motion-compensated from above forward motion vector and backward motion vector of direct mode. Therefore, the accuracy of the predicted block can be improved and the coding efficiency can be improved.

As the present invention may be embodied in several forms without departing from the scope as defined in the appended claims.

**Claims**

1.  A method of predicting a current block ($B_c'$) of a bi-predictive picture ($B_5$) in direct mode, comprising:

    obtaining a forward motion-compensated block ($B_f$) by using a forward reference picture ($P_1 : P_4$) and a forward ($MV_f$) motion vector, and obtaining a backward motion-compensated block ($B_b$) by using a backward reference picture ($P_7$) and a backward ($MV_b$) motion vector; and
    predicting the current block ($B_c'$) of the bi-predictive picture ($B_5$) from a sum of the forward motion-compensated block ($B_f$) multiplied by a first value and the backward motion-compensated block ($B_b$) multiplied by a second value,
    wherein the first and second values are based on a difference between a picture order count information ($T_c$) of the bi-predictive picture ($B_5$) and a picture order count information ($T_f$) of the forward reference picture ($P_1$; $P_4$), and a difference between the a picture order count information ($T_b$) of the backward reference picture ($P_7$) and the picture order count information ($T_f$) of the forward reference picture (P1;P4), said picture order count information representing display order information of respective pictures.

2.  The method of claim 1, wherein the second value becomes larger as the difference between the picture order count ($T_c$) of the bi-predictive picture ($B_5$) and the picture order count ($T_f$) of the forward reference picture ($P_1$; $P_4$) becomes larger.

3.  The method of claim 1 or 2, wherein the first value becomes smaller as the second value becomes larger.

4. The method of one of the claims 2 to 3, wherein the first value is dependent on a difference between the picture order count ($T_b$) of the backward reference picture ($P_7$) and the picture order count ($T_c$) of the bi-predictive picture ($B_5$).

5. The method of claim 4, wherein the first value becomes larger as the difference between the picture order count ($T_b$) of the backward reference picture ($P_7$) and the picture order count ($T_c$) of the bi-predictive picture ($B_5$) becomes larger.

6. The method of claim 4 or 5, wherein the second value becomes smaller as the first value becomes larger.

7. The method of one of the preceding claims, wherein the current block ($B_c$) of the bi-predictive picture ($B_5$) is predicted by a following equation,

$$B_c' = B_f X \frac{(T_b - T_c)}{(T_b - T_f)} + B_b X \frac{(T_c - T_f)}{(T_b - T_{f)}} \ ,$$

wherein,

$B_c'$ is a predicted value of the current block,
$B_f$ is the forward motion-compensated block,
$B_b$ is the backward motion-compensated block,
$T_b$ is the picture order count for the backward reference picture ($P_7$),
$T_c$ is the picture order count for the bi-predictive picture ($B_5$), and
$T_f$ is the picture order count for the forward reference picture ($P_1$; $P_4$).

**Patentansprüche**

1. Verfahren zur Prädiktion eines aktuellen Blocks (Bc') eines bi-prädiktiven Bildes ($B_5$) im Direktmodus, folgendes umfassend:

   Erhalten eines vorwärtsbewegungskompensierten Blocks ($B_f$) unter Verwendung eines Vorwärtsreferenzbilds ($P_1$; $P_4$) und eines Vorwärtsbewegungsvektors ($MV_f$) und Erhalten eines rückwärtsbewegungskompensierten Blocks ($B_b$) unter Verwendung eines Rückwärtsreferenzbilds ($P_7$) und eines Rückwärtsbewegungsvektors ($MV_b$); und
   Prädiktion des aktuellen Blocks (Bc') des bi-prädiktiven Bildes ($B_5$) von einer Summe des mit einem ersten Wert multiplizierten vorwärtsbewegungskompensierten Blocks ($B_f$) und des mit einem zweiten Wert multiplizierten rückwärtsbewegungskompensierten Blocks ($B_b$),
   wobei der erste und der zweite Wert auf einer Differenz zwischen einer Bildfolgezählerinformation ($T_c$) des bi-prädiktiven Bildes ($B_5$) und einer Bildfolgezählerinformation ($T_f$) des Vorwärtsreferenzbildes ($P_1$; $P_4$) sowie einer Differenz zwischen einer Bildfolgezählerinformation ($T_b$) des Rückwärtsreferenzbildes ($P_7$) und der Bildfolgezählerinformation ($T_f$) des Vorwärtsreferenzbildes ($P_1$; $P_4$) basieren, wobei die Bildfolgezählerinformation eine Anzeigenfolgeinformation entsprechender Bilder darstellt.

2. Verfahren gemäß Anspruch 1, wobei der zweite Wert größer wird, wenn die Differenz zwischen dem Bildfolgezähler ($T_c$) des bi-prädiktiven Bildes ($B_5$) und dem Bildfolgezähler ($T_f$) des Vorwärtsreferenzbildes ($P_1$; $P_4$) größer wird.

3. Verfahren gemäß Anspruch 1 oder 2, wobei der erste Wert kleiner wird, wenn der zweite Wert größer wird.

4. Verfahren gemäß einem der Ansprüche 2 bis 3, wobei der erste Wert von einer Differenz zwischen dem Bildfolgezähler ($T_b$) des Rückwärtsreferenzbildes ($P_7$) und dem Bildfolgezähler ($T_c$) des bi-prädiktiven Bildes ($B_5$) abhängig ist.

5. Verfahren gemäß Anspruch 4, wobei der erste Wert größer wird, wenn die Differenz zwischen dem Bildfolgezähler ($T_b$) des Rückwärtsreferenzbildes ($P_7$) und dem Bildfolgezähler ($T_c$) des bi-prädiktiven Bildes ($B_5$) größer wird.

6. Verfahren gemäß Anspruch 4 oder 5, wobei der zweite Wert kleiner wird, wenn der erste Wert größer wird.

7. Verfahren gemäß einem der vorhergehenden Ansprüche, wobei die Prädiktion des aktuellen Blocks ($B_c$) des bi-

prädiktiven Bildes ($B_5$) durch die folgende Gleichung erfolgt:

$$B_c' = B_f x \frac{(T_b - T_c)}{(T_b - T_f)} + B_b x \frac{(T_c - T_f)}{(T_b - T_f)}$$

wobei:

$B_c$' ein Prädiktionswert des aktuellen Blocks ist,
$B_f$ der vorwärtsbewegungskompensierte Block ist,
$B_b$ der rückwärtsbewegungskompensierte Block ist,
$T_b$ der Bildfolgezähler für das Rückwärtsreferenzbild ($P_7$) ist,
$T_c$ der Bildfolgezähler für das bi-prädiktive Bild ($B_5$) ist, und
$T_f$ der Bildfolgezähler für das Vorwärtsreferenzbild ($P_1$; $P_4$) ist.

## Revendications

1.  Méthode de prédiction d'un bloc actuel ($B_c$') d'une image bi-prédictive ($B_5$) en mode direct, comprenant :

    obtenir un bloc à mouvement compensé vers l'avant ($B_f$) en utilisant une image de référence avant ($P_1$ ; $P_4$) et un vecteur de mouvement vers l'avant ($MV_f$), et obtenir un bloc à mouvement compensé vers l'arrière ($B_b$) en utilisant une image de référence arrière ($P_7$) et un vecteur de mouvement vers l'arrière ($MV_b$) ; et
    prédire le bloc actuel ($B_c$') de l'image bi-prédictive ($B_5$) à partir d'une somme du bloc à mouvement compensé vers l'avant ($B_f$) multiplié par une première valeur et du bloc à mouvement compensé vers l'arrière ($B_b$) multiplié par une seconde valeur,
    dans laquelle la première et la seconde valeur sont basées sur une différence entre une information de comptage ordonné d'image ($T_c$) de l'image bi-prédictive ($B_5$) et une information de comptage ordonné d'image ($T_f$) de l'image de référence avant ($P_1$ ; $P_4$), et sur une différence entre l'information de comptage ordonné d'image ($T_b$) de l'image de référence arrière ($P_7$) et l'information de comptage ordonné d'image ($T_f$) de l'image de référence avant ($P_1$ ; $P_4$), ladite information de comptage ordonné d'image représentant des informations ordonnées d'affichage d'images respectives.

2.  Méthode de la revendication 1, dans laquelle la seconde valeur devient plus grande au fur et à mesure que la différence entre le comptage ordonné d'image ($T_c$) de l'image bi-prédictive ($B_5$) et le comptage ordonné d'image ($T_f$) de l'image de référence avant ($P_1$ ; $P_4$) devient plus grande.

3.  Méthode de la revendication 1 ou la revendication 2, dans laquelle la première valeur devient plus petite au fur et à mesure que la seconde valeur devient plus grande.

4.  Méthode de l'une des revendications 2 à 3, dans laquelle la première valeur est dépendante d'une différence entre le comptage ordonné d'image ($T_b$) de l'image de référence arrière ($P_7$) et le comptage ordonné d'image ($T_c$) de l'image bi-prédictive ($B_5$).

5.  Méthode selon la revendication 4, dans laquelle la première valeur devient plus grande au fur et à mesure que la différence entre le comptage ordonné d'image ($T_b$) de l'image de référence arrière ($P_7$) et le comptage ordonné d'image ($T_c$) de l'image bi-prédictive ($B_5$) devient plus grand.

6.  Méthode selon la revendication 4 ou la revendication 5, dans laquelle la seconde valeur devient plus petite au fur et à mesure que la première valeur devient plus grande.

7.  Méthode de l'une des revendications précédentes, dans laquelle le bloc actuel (B,') de l'image bi-prédictive ($B_5$) est prédit par une équation suivante,

$$B_c' = B_f \times \frac{(T_b - T_c)}{(T_b - T_f)} + B_b \times \frac{(T_c - T_f)}{(T_b - T_f)},$$

dans laquelle,

$B_c'$ est une valeur prédite du bloc actuel,

$B_f$ est le bloc à mouvement compensé vers l'avant,

$B_b$ est le bloc à mouvement compensé vers l'arrière,

$T_b$ est le comptage ordonné d'image pour l'image de référence arrière ($P_7$),

$T_c$ est le comptage ordonné d'image pour l'image bi-prédictive ($B_5$), et

$T_f$ est le comptage ordonné d'image pour l'image de référence avant ($P_7$ ; $P_4$).

# FIG. 1
## CONVENTIONAL ART

# FIG. 2

# FIG. 3

# FIG. 4

**EP 1 601 209 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0863674 A

- WO 0133864 A